(19) Europäisches Patentamt
European Patent Office
Office européen des brevets

(11) Veröffentlichungsnummer: **0 313 867 B1**

(12) **EUROPÄISCHE PATENTSCHRIFT**

(45) Veröffentlichungstag der Patentschrift: **30.09.92**

(51) Int. Cl.[5]: **C08G 77/38**, D06M 15/647, //C08G77/46

(21) Anmeldenummer: **88116285.3**

(22) Anmeldetag: **01.10.88**

# (54) Organopolysiloxane mit Buntesalzgruppen.

(30) Priorität: **16.10.87 DE 3735086**

(43) Veröffentlichungstag der Anmeldung:
**03.05.89 Patentblatt 89/18**

(45) Bekanntmachung des Hinweises auf die Patenterteilung:
**30.09.92 Patentblatt 92/40**

(84) Benannte Vertragsstaaten:
**BE CH DE FR GB IT LI NL**

(56) Entgegenhaltungen:
**EP-A- 0 016 907**
**EP-A- 0 032 310**
**EP-A- 0 130 460**
**EP-A- 0 193 402**

**JOURNAL OF POLYMER SCIENCE. POLYMER LETTERS EDITION, Band 23, No. 9, September 1985, Seiten 465-467, New York. Us; D.G. Bannister et al.: "A Water-Soluble Siloxane: Poly(ethylene glycol) Comb Polymer"**

(73) Patentinhaber: **Th. Goldschmidt AG**
**Goldschmidtstrasse 100 Postfach 101461**
**W-4300 Essen 1(DE)**

(72) Erfinder: **Grüning, Burghard, Dr.**
**Waldsaum 11**
**W-4300 Essen 1(DE)**

**EP 0 313 867 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Organopolysiloxane mit über Kohlenstoffatome gebundenen Buntesalzgruppen. Die Erfindung betrifft insbesondere Organopolysiloxane, welche zusätzlich zu den Buntesalzgruppen Oxialkylengruppen, insbesondere Polyoxialkylengruppen, enthalten.

Organopolysiloxane mit über Kohlenstoffatome an ein Siliciumatom gebundenen Buntesalzgruppen sind aus dem Stand der Technik bekannt.

Derartige Organopolysiloxane sind in der DE-PS 33 23 881 beschrieben. Diese Organopolysiloxane mit Buntesalzgruppen entsprechen der allgemeinen Formel

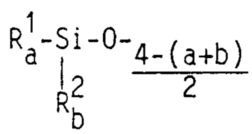

wobei

$R^1$ der Methylrest ist, jedoch bis zu 10 % der Reste $R^1$ Alkylreste mit bis zu 18 Kohlenstoffatomen, Vinyl-, Phenyl- oder Hydroxylreste oder Wasserstoff sein können,

$R^2$ der Rest

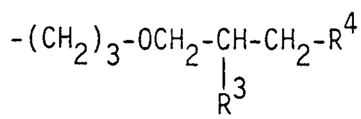

oder der Rest

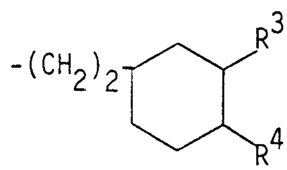

ist, wobei einer der Reste $R^3$ oder $R^4$ eine OH-Gruppe und der andere Rest eine $-S_2O_3Me$-Gruppe (Me = Alkalimetall oder, gegebenenfalls substituierter, Ammoniumrest) ist, wobei jedoch in bis zu 50 % der Reste $R^2$ die Reste $R^3$ und $R^4$ Hydroxylreste oder gemeinsam der Sauerstoffrest eines Oxiranriges sein können,

a einen beliebigen Wert von 1 bis 2,33 und

b einen beliebigen Wert von 0,02 bis 1 hat.

Buntesalze werden durch wäßrige Säuren unter Bildung von Thiolen hydrolysiert. In alkalischem Medium bilden sich unter anderem die entsprechenden Disulfide. Die Reaktivität wird ausgenutzt, um z.B. Farbstoffe mit Buntesalzgruppen auf textilem Material zu fixieren.

Die funktionellen Gruppen der Fasern, wie die OH-Gruppen der Cellulose, Amino- und Thiolgruppen der Wolle oder Säureamidgruppen synthetischer Polyamide, reagieren dabei als nucleophile Agentien. Nach Vorbehandlung von Cellulose mit Natriumsulfidlösung oder bei Behandlung von Wolle erfolgt auf dem Substrat eine Polykondensation unter Ausbildung von Disulfidbrücken. Eine entsprechende Färbung mit Buntesalzfarbstoffen ist deshalb naßfest.

Die in der DE-PS 33 23 881 beschriebenen Buntesalzgruppen aufweisenden Organopolysiloxane eignen sich zur Oberflächenbehandlung von anorganischen oder organischen Materialien. Sie erweisen sich in besonderem Maße zur Behandlung von textilen Materialien, insbesondere Wolle, als geeignet. Es ist ein besonderer Vorteil dieser Verbindungen, daß sie, auf textile Oberflächen aufgebracht, durch Zugabe von Natriumsulfid bereits bei Zimmertemperatur unter Filmbildung vernetzen, so daß eine dauerhafte Ausrüstung des textilen Materials erfolgt. Dabei kann man Fasern, Garne, Gewebe, Gewirke, Vliese oder andere Materialien behandeln.

Besonders eignen sich diese Verbindungen zum Schrumpffestmachen von Wolle. Hierbei werden die Verbindungen in Form einer Lösung oder Dispersion in Wasser oder Wasser/Alkohol-Gemischen in Mengen von 0,1 bis 5 % auf die Faser aufgebracht. Die erhaltenen Ausrüstungen sind beständig gegen organische Lösungsmittel, wie sie z.B. in der chemischen Reinigung verwendet werden.

Im Gegensatz zu herkömmlichen Verfahren zur Ausrüstung von Wolle, insbesondere zur Ausrüstung des Kammzuges, kann bei diesem Verfahren auf die oxidative Vorbehandlung der Faser verzichtet werden, was einen deutlichen Fortschritt bedeutete, da durch Behandlung mit Chlor oder Peroxiden die Faser wesentlich geschädigt werden kann.

Die bekannten Buntesalzgruppen enthaltenden Siloxane können außer zur Behandlung von Textilien weiterhin sehr günstig zur hydrophobierenden Ausrüstung anderer fester Materialien, wie Papier oder Mineralwolle, eingesetzt werden. Die wesentliche Besonderheit der Buntesalzgruppen enthaltenden Siloxane liegt auch bei diesen Anwendungen darin, daß diese bereits bei Raumtemperatur durch die Zugabe von Sulfiden zur Vernetzung zu bringen sind.

Die in der DE-PS 33 23 881 beschriebenen Buntesalzgruppen enthaltenden Siloxane lösen sich in Wasser, sofern sie einen genügend großen Anteil Buntesalzgruppen enthalten. Dabei besteht eine Relation zwischen der Anzahl der Si-Atome im Polysiloxan und der Anzahl der zur Solubilisierung notwendigen Buntesalzgruppen. Mit steigendem Molekulargewicht des Organopolysiloxans wird eine steigende Anzahl von Buntesalzgruppen zur Wasserlöslichmachung benötigt. Der Erhöhung der Anzahl der Buntesalzgruppen stehen aber anwendungstechnische Nachteile entgegen, die sich aus der Erhöhung der Vernetzungsdichte des auf dem Substrat vernetzten Polymerisates ergeben. Ausgerüsteten Geweben kann durch ein stark vernetztes Polymer ein unerwünscht harter Griff vermittelt werden. Die Erhöhung der Vernetzungsdichte führt zu einer Zunahme des Schrumpfes des entstehenden Polymers. Die Belegung anorganischer oder organischer Materialien kann dadurch ungleichmäßig und unvollständig werden.

Durch die Reaktion der Buntesalzgruppen geht der hydrophile Anteil der Organopolysiloxane während der Vernetzungsreaktion verloren, die Ausrüstung vermittelt dem Substrat daher zwangsläufig wasserabweisende Eigenschaften, die oftmals unerwünscht sind.

Der vorliegenden Erfindung liegt deshalb die Aufgabe zugrunde, Buntesalzgruppen enthaltende Organopolysiloxane zu finden, die die vorgenannten Nachteile nicht aufweisen. Insbesondere ist es wünschenswert, Organopolysiloxanbuntesalze zu erhalten, bei denen das hydrophile und hydrophobe Verhalten dem gewünschten Anwendungszweck angepaßt werden kann und die somit den ausgerüsteten Materialien ein ausgewogenes Maß an Hydrophilie vermitteln können.

Dieses bezüglich der Hydrophilie und Hydrophobie abgestimmte Verhalten ist erfindungsgemäß bei neuartigen Organopolysiloxanen der allgemeinen Formel

$$R^1_a\text{-}\underset{\displaystyle R^2_b}{\underset{|}{\text{Si}}}\text{-}O_{\frac{4-(a+b)}{2}} \qquad \text{I}$$

zu finden, wobei

$R^1$ der Methylrest ist, jedoch bis zu 10 % der Gruppen $R^1$ Phenylreste sein können,

$R^2$ der Rest $R^3$

$$R^3 = -(C_nH_{2n})\text{-}O\text{-}(C_mH_{2m}O)_p\text{-}R^5_q\text{-}CH_2\overset{\displaystyle R^7}{\overset{|}{C}}HCH_2R^6$$

$$R^5 = -\underset{\displaystyle CH_2Halogen}{\underset{|}{CH}}\text{-}CH_2O\text{-} \quad \text{oder} \quad -CH_2\text{-}\underset{\displaystyle CH_2Halogen}{\underset{|}{CH}}\text{-}O\text{-}$$

$R^6$, $R^7$ = eine der beiden Gruppen -OH, die andere $-S_2O_3Me$

Me = Alkalimetall oder gegebenenfalls substituierter Ammoniumrest,
n = 3 bis 6,
m = 2 bis 3,
p = 0 bis 100,
q = 0 bis 5, und/oder
der Rest $R^4$
$R^4$ = $-(C_xH_{2x})-O-(C_yH_{2y}O)_zR^8$
$R^8$ = Wasserstoff-, Alkyl- oder Acylrest mit 1 bis 4 Kohlenstoffatomen,
x = 3 bis 6,
y = 2 bis 3,
z = 1 bis 100, ist,
mit der Maßgabe, daß im durchschnittlichen Molekül mindestens 1 Rest $R^2$ die Bedeutung des Restes $R^3$ hat und, wenn im Rest $R^3$ p = 0 ist, mindestens 1 Rest $R^4$ vorhanden ist,
a = 1 bis 2,33,
b = 0,02 bis 1 und
$2 \leqq a + b \leqq 3$ ist.

Von besonderer Bedeutung ist in dieser Formel die Definition des Restes $R^2$. Dieser Rest $R^2$ kann zwei verschiedene Reste, nämlich den Rest $R^3$ oder den Rest $R^4$ bedeuten.

Bevorzugt sind Organopolysiloxane, bei denen der Rest $R^2$ die Bedeutung des Restes $R^3$ hat.

Innerhalb des Restes $R^3$ stellt die Gruppe $C_nH_{2n}$ einen Alkylenrest dar, welcher 3 bis 6 Kohlenstoffatome aufweist. Dieser Alkylenrest kann geradkettig oder verzweigt sein. Vorzungsweise ist der Alkylenrest $-(CH_2)_3-$. Der Rest $R^3$ ist somit über Kohlenstoff an das Siliciumatom gebunden. Die Gruppe $C_nH_{2n}O$ ist eine Oxialkylengruppe. Der Index m kann einen Zahlenwert von 2 oder 3 annehmen, je nachdem, ob dieser Rest die Bedeutung einer Oxiethylen- oder Oxipropylengruppe hat. Da die Formel I jedoch eine allgemeine durchschnittliche Formel ist und im mittleren Molekül sowohl Oxiethylen- wie Oxipropyleneinheiten nebeneinander vorliegen können, kann der Wert des Index m zahlenmäßig auch einen gebrochenen Wert zwischen 2 und 3 annehmen. Die Anzahl der Oxialkyleneinheiten ist durch den Index p wiedergegeben. Der Index p hat im mittleren Molekül einen Wert von 0 bis 100. Hierbei ist zu beachten, daß neben den Resten $R^3$ zusätzlich Reste $R^4$ vorliegen müssen, wenn im durchschnittlichen Molekül p = 0 ist.

$R^5$ wird durch die Reste

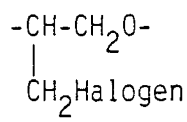
oder
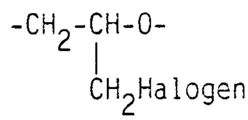

gebildet. Halogen steht hier für Halogenreste, vorzugsweise den Chlorrest. Die Anzahl der Reste $R^5$ wird durch den Index q wiedergegeben. q kann einen Wert von 0 bis 5 haben. Die Reste $R^5$ sind herstellungsbedingt und tragen zu den Eigenschaften der erfindungsgemäßen Organopolysiloxane nicht oder nicht wesentlich bei.

Einer der beiden Reste $R^6$ bzw. $R^7$ hat die Bedeutung einer Buntesalzgruppe $-S_2O_3Me$, wobei Me ein Alkalimetall, vorzugsweise Natrium, oder ein gegebenenfalls substituierter Ammoniumrest ist. Beispiele von substituierten Ammoniumresten sind der Tetrabutylammonium-, Tetramethylammonium- oder Didecyldimethylammoniumrest. Der andere Rest $R^6$ bzw. $R^7$ ist ein Hydroxylrest.

$R^2$ kann gegebenfalls auch der Rest $R^4$ sein. Dabei ist zu beachten, daß die Anwesenheit mindestens eines Restes $R^3$ zwingend ist. Die gleichzeitige Anwesenheit des Restes $R^4$ ist nur dann zwingend, wenn beim Rest $R^3$ der Index p = 0 ist.

Innerhalb des Restes $R^4$ entspricht die Gruppe $C_xH_{2x}$ der Gruppe $C_nH_{2n}$ des Restes $R^3$. Beide Gruppen müssen jedoch nicht identisch sein. In ähnlicher Weise entspricht die Gruppe $(C_yH_{2y}O)_z$ des Restes $R^4$ der Gruppe $(C_mH_{2m}O)_p$ des Restes $R^3$, ohne daß diese beiden Gruppen identisch sein müssen. $R^8$ ist ein Wasserstoff-, Alkyl-oder Acylrest mit 1 bis 4 Kohlenstoffatomen. Als Alkylrest ist der Methylrest und als Acylrest der Acetylrest bevorzugt.

Die geforderte Abstimmung des hydrophilen/hydrophoben Verhaltens kann nun auf zwei verschiedenen Wegen vorgenommen werden: So ist es z.B. möglich, die Hydrophilie dieser erfindungsgemäßen Organopolysiloxane entsprechend dem Stand der Technik durch die Anzahl der im durchschnittlichen Molekül vorhandenen Buntesalzgruppen (entsprechend der Anzahl der Reste $R^3$) zu erhöhen. Bei einer Vernetzung der Produkte auf einem Substrat entfällt aber diese hydrophilierende Wirkung durch die Reaktion der

Buntesalzgruppen. Die Hydrophilie der erfindungsgemäßen Organopolysiloxane kann aber nun zusätzlich durch die Art und die Anzahl der Oxialkylengruppen beeinflußt werden, wobei die Hydrophilie mit steigendem Oxiethylengehalt zunimmt. Diese Hydrophilierung des Organopolysiloxans bleibt auch nach der Reaktion der Buntesalzgruppen auf dem Substrat erhalten. Eine zusätzliche Beeinflussung der Hydrophilie kann durch das Verhältnis von Oxiethylen- zu Oxipropylengruppen eingestellt werden. Hieraus wird auch verständlich, daß, wenn im Rest $R^3$ p = 0 ist, ein oder mehrere Rest $R^4$ vorhanden sein müssen, um die geforderte Hydrophilie zu gewährleisten.

Beispiele von erfindungsgemäßen modifizierten Organopolysiloxanen können durch die folgenden Formeln wiedergegeben werden, wobei es sich, dem Fachmann verständlich, um durchschnittliche, idealisierte Formeln handelt. Es liegt im Wesen der siliciumorganischen Chemie, daß derartige Organopolysiloxane immer in Form von Gemischen, z.B. unterschiedlicher Länge der Siloxanblöcke, vorliegen.

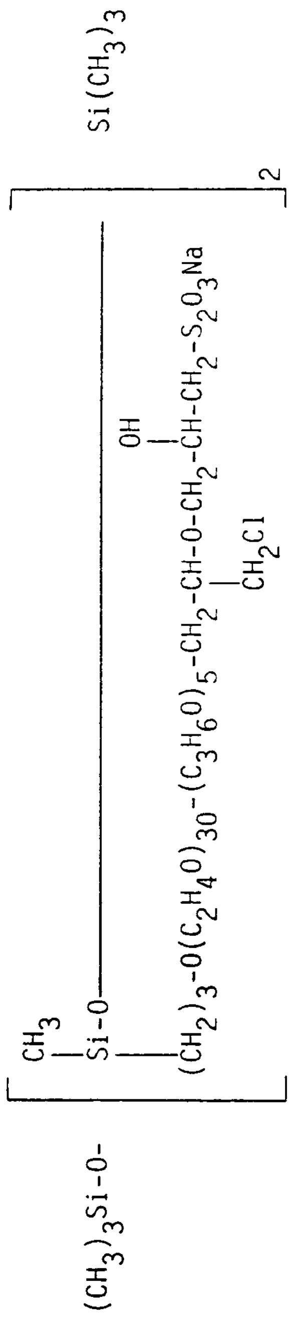

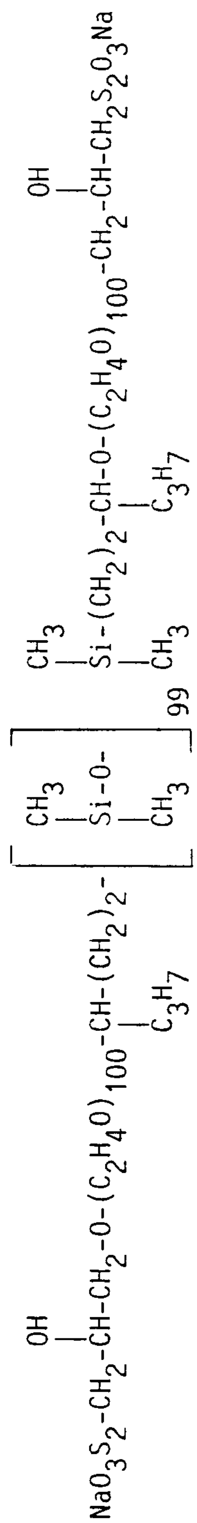

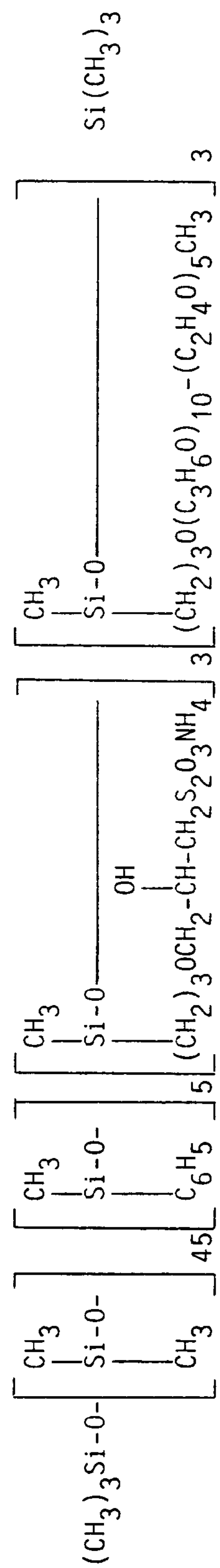

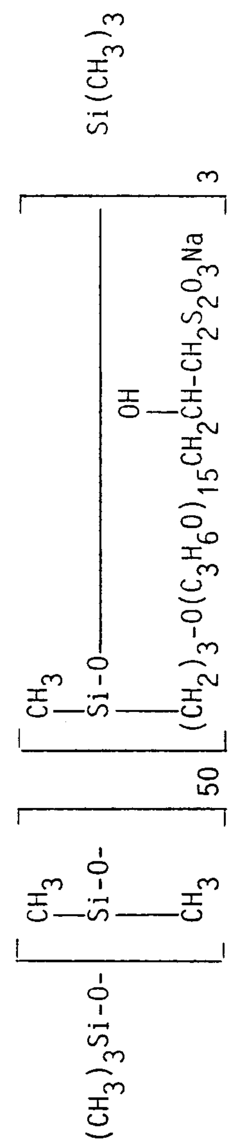

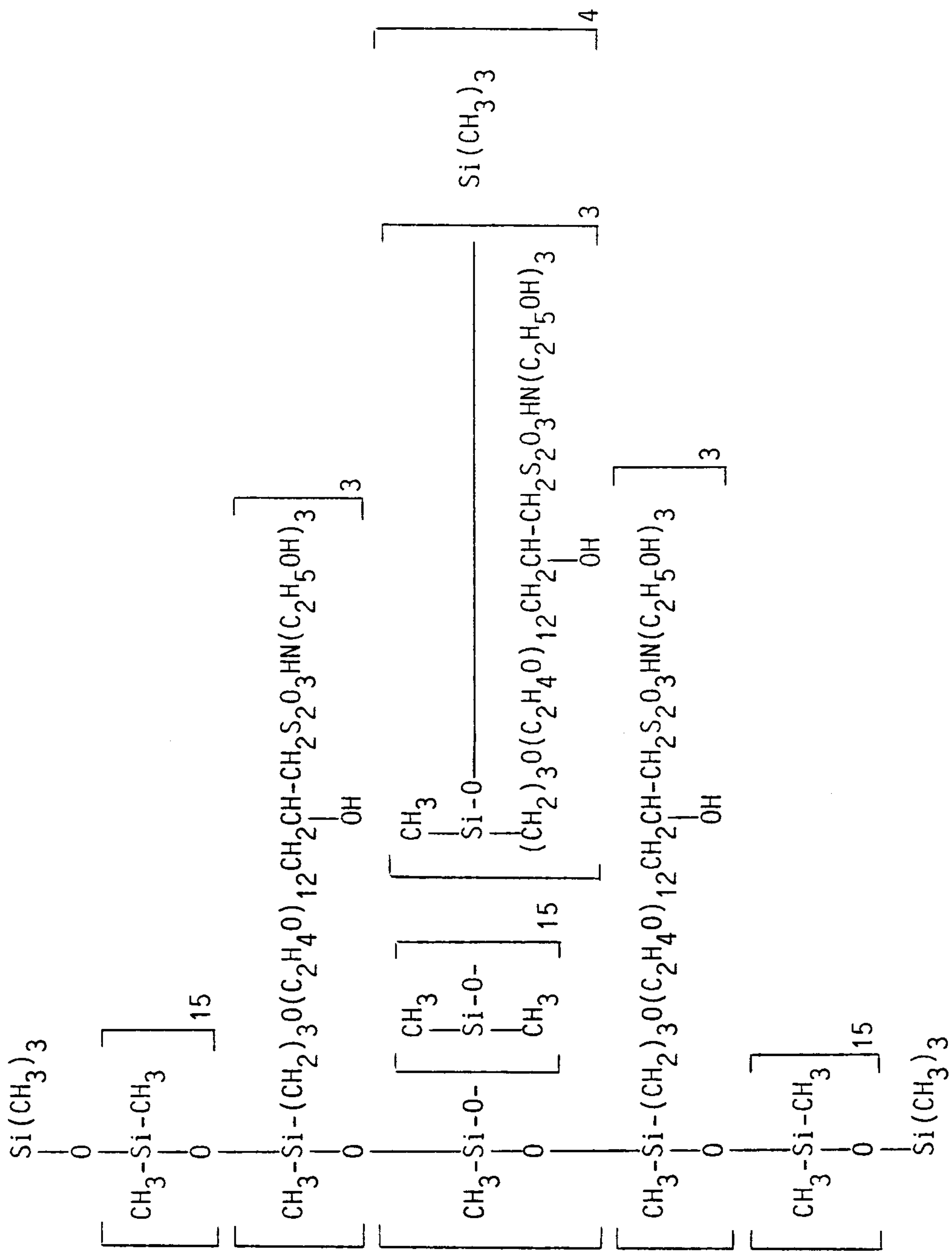

Die erfindungsgemäßen neuartigen Organopolysiloxane mit Oxialkylenbuntesalzgruppen können gemäß einem weiteren Gegenstand der Erfindung dadurch hergestellt werden, daß man Epoxigruppen aufweisende Organopolysiloxane der allgemeinen Formel

$$R^1_a\text{-}\underset{\underset{R^9_b}{|}}{Si}\text{-}O_{\frac{4-(a+b)}{2}} \qquad II$$

worin
$R^1$, a und b wie oben definiert sind, und
$R^9$ der Rest $R^{10}$

$$R^{10} = -(C_nH_{2n})-O-(C_mH_{2m}O)_p-R^5_q-CH_2\underbrace{CHCH_2}_{O}$$

$R^5$, n, m, p, q wie oben definiert, oder
der Rest $R^4$, $R^4$ wie oben definiert, ist,
mit der Maßgabe, daß im durchschnittlichen Molekül mindestens 1 Rest $R^9$ die Bedeutung des Restes $R^{10}$ hat und, wenn im Rest $R^{10}$ p = 0 ist, mindestens 1 Rest $R^4$ vorhanden ist,
mit in bezug auf Epoxigruppen äquimolaren Mengen $Me_2S_2O_3$ in wäßrigem Medium, dem gegebenefalls polare organische Lösungsmittel zugesetzt sind, bei Temperaturen bis zu 100 °C umsetzt, wobei während der Umsetzung Säuren in solchen Mengen zugesetzt werden, daß ein pH-Bereich von 5 bis 9 eingehalten wird.

Als organische polare Lösungsmittel werden vorzugsweise niedere aliphatische Alkohole, wie z.B. Ethanol oder Isopropanol, verwendet, wobei je Vol.-Teil Wasser vorzugsweise 0,5 bis 5 Vol.-Teile organisches Lösungsmittel eingesetzt werden.

Die Reaktion läuft bei Raumtemperatur oder mäßig erhöhten Temperaturen ab, wobei die Reaktionsgeschwindigkeit mit steigendem Molekulargewicht und steigender Hydrophobie der Organopolysiloxane abnimmt. Die Reaktion wird deshalb gegebenenfalls bei Temperaturen bis zu 100 °C durchgeführt.

Es ist wesentlich, daß während der Umsetzung ein pH-Bereich von 5 bis 9 eingehalten wird. Dies erfolgt zweckmäßig durch Zugabe einer Säure, insbesondere durch Zugabe verdünnter Salzsäure oder Essigsäure. Man kann auch säureabspaltende Verbindungen oder geeignete, mit sauren Gruppen beladene Ionenaustauscher verwenden.

Hierdurch wird erreicht, daß die Reaktion des Thiosulfats mit den Epoxigruppen des Polysiloxans vollständig abläuft. Es ist nicht zulässig, die zur Neutralisierung der freigesetzten Base notwendige Säure von Anfang an zuzusetzen, da man in diesem Falle durch das saure Medium das gebildete Buntesalz zersetzen würde. Es ist vielmehr wichtig, den geforderten pH-Bereich von 5 bis 9 während der Reaktion aufrechtzuerhalten. Dies erfordert die kontrollierte und ständige Zugabe von Säure.

Die erfindungsgemäßen und nach dem vorgenannten Verfahren hergestellten Verbindungen sind je nach Molekulargewicht, Verzweigungsgrad, Aufbau der Polyoxialkylenketten und Gehalt an Buntesalzgruppen flüssige, pastöse oder feste Substanzen.

Bei dem erfindungsgemäßen Verfahren ist nicht auszuschließen, daß bei der ringöffnenden Reaktion mit dem Thiosulfat ein geringer Anteil an Epoxidgruppen im Verfahrensprodukt verbleibt. Diese Gruppen stören jedoch nicht bei der späteren Anwendung der Produkte.

Die Herstellung der Ausgangsprodukte ist dem Fachmann geläufig. Die Ausgangsverbindungen können z.B. dadurch hergestellt werden, daß man an Wasserstoffpolysiloxan Allylpolyoxialkylenglycidylether anlagert.

Die Erfindung betrifft schließlich die Verwendung der erhaltenen Verbindungen zur permanenten Ausrüstung von Fasern oder Faserprodukten.

Eine weitere erfindungsgemäße Verwendung besteht in der Verwendung zur Behandlung tierischer und menschlicher Haare. Bei der Behandlung von Fasern oder Faserprodukten, wie z.B. Textilien, erhält man eine naßfeste, d.h. permanente Ausrüstung, welche in besonderem Maße der Anschmutzung widersteht und dem Substrat einen angenehm weichen Griff verleiht. Durch die gesteigerte Hydrophilie der Ausrüstung wird insbesondere der Tragekomfort ausgerüsteter Textilien verbessert.

Die erfindungsgemäßen Verbindungen können in Form einer wäßrigen Zubereitung, vorzugsweise einer wäßrigen Lösung, in Mengen von 0,1 bis 5 % auf die Faser oder das Faserprodukt aufgebracht werden, wo sie durch Zugabe geeigneter SH-Gruppen bildender oder enthaltender Agenzien, wie z.B. Natriumsulfid, Thioglykolsäure oder Cystein, bereits bei Zimmertemperatur unter Filmbildung vernetzt werden können.

Bei der Behandlung tierischer und menschlicher Haare bringt man verdünnte wäßrige oder wäßrig/alkoholische Lösungen auf die Haare. Durch die Behandlung werden die Kämmbarkeit, die Geschmeidigkeit und der natürliche Glanz der Haare verbessert. Durch teilweise oder vollständige Vernetzung der Verbindungen kann diesem Effekt eine gewisse Dauerhaftigkeit verliehen werden. Insbesondere stark geschädigte Haare, wie sie etwa nach intensiver Bleichung mit Wasserstoffperoxid enthaltenden Präparaten vorliegen, können auf diese Weise hinsichtlich Geschmeidigkeit, Kämmbarkeit und Glanz deutlich verbessert werden.

Bei der Behandlung von Wolle, insbesondere gestrickten oder gewirkten Wollprodukten, wird der Schrumpf und die Verfilzung der Wolle vermindert. Dabei ist von besonderer Bedeutung, daß bei der

Vernetzung eine bleibende Verankerung auf der Wolle erzielt wird, so daß die behandelten Wollprodukte in wäßrigen Waschflotten gewaschen oder mit organischen Lösungsmitteln chemisch wiederholt gereinigt werden können, ohne daß die Ausrüstung entfernt wird.

Die Herstellung und Verwendung der erfindungsgemäßen Verbindungen wird in den nachfolgenden Beispielen noch näher erläutert.

Die Beispiele 1 bis 8 erläutern die erfindungsgemäße Herstellung von Siliconpolyetherbuntesalzen.

Beispiel 1

87,5 g (0,353 Mol) $Na_2S_2O_3 . 5 H_2O$, 900 ml Wasser und 500 g des epoxifunktionellen Siliconpolyethercopolymeren der mittleren Formel

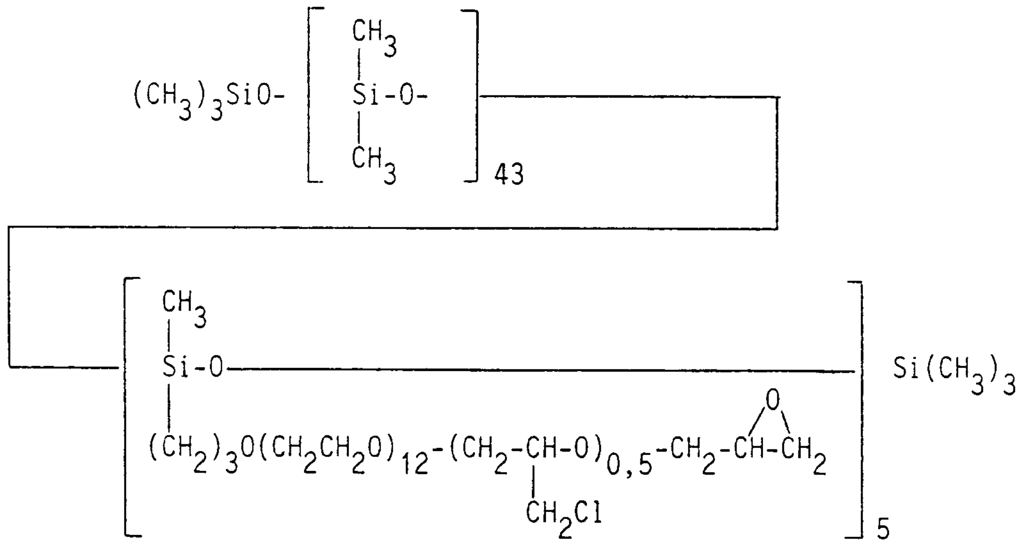

werden bei Raumtemperatur zusammengegeben. Der pH-Wert wird beobachtet. Das Reaktionsgemisch wird auf 50 ° C erwärmt. Die einsetzende Reaktion äußert sich in einem Ansteigen des pH-Wertes. Dieser wird durch fortlaufende Zugabe von Essigsäure im Bereich von 8 bis 9 gehalten. Nach etwa 2 Stunden wird die Temperatur auf 80 ° C erhöht. Nach weiteren 2 Stunden ist die Umsetzung beendet, was daran zu erkennen ist, daß der pH-Wert sich nicht mehr ändert. Schließlich wird mit Essigsäure auf pH7 eingestellt. Insgesamt werden 21,5 g Essigsäure zugetropft. Die Lösung des entstandenen Siliconpolyetherbuntesalzes enthält ca. 38 % Feststoffe. Das Produkt kann in dieser Form verschiedenen Anwendungen zugeführt werden; eine Isolierung des Wirkstoffes ist nicht notwendig.

Beispiel 2

70,5 g (0,284 Mol) $Na_2S_2O_3 . 5 H_2O$, 190 ml Wasser, 435 ml Isopropanol und 500 g des epoxifunktionellen Siliconpolyethercopolymeren der mittleren Formel

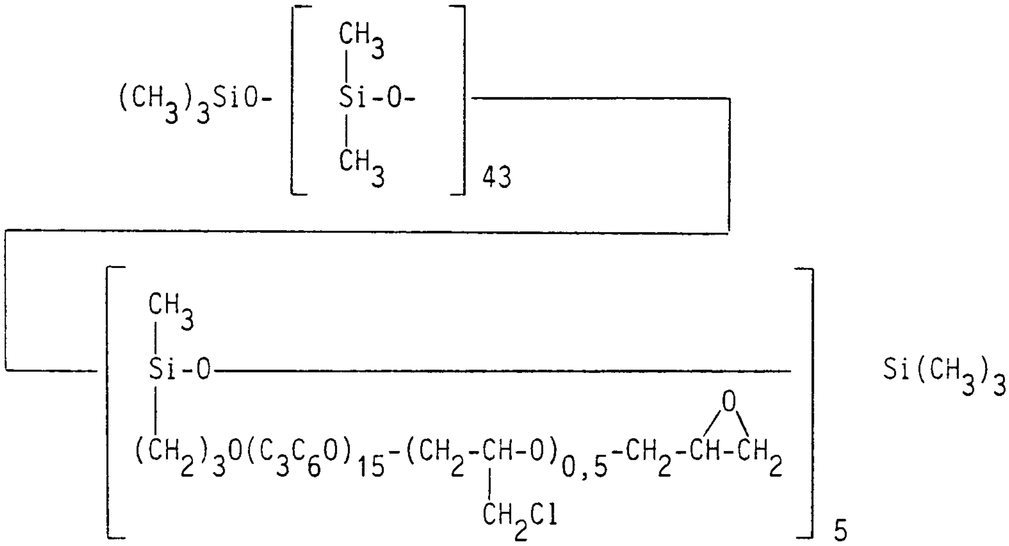

werden bei Raumtemperatur zusammengegeben. Das Reaktionsgemisch wird auf 80 ° C erwärmt. Der pH-Wert wird durch fortlaufende Zugabe von Essigsäure bei 8 bis 9 gehalten. Die Reaktion ist beendet, wenn sich der pH-Wert nicht mehr ändert. Dies ist nach etwa 7 Stunden der Fall. Anschließend wird mit Essigsäure auf pH 7 eingestellt. Insgesamt werden 17 g Essigsäure zugetropft. Die resultierende Lösung des entstandenen Siliconpolyetherbuntesalzes enthält ca. 50 % Festkörper. Das Produkt kann in dieser Form verschiedenen Anwendungen zugeführt werden.

Beispiel 3

78,8 g (0,318 Mol) $Na_2S_2O_3$ . 5 $H_2O$, 155 ml Wasser und 430 ml Isopropanol und 500 g des epoxifunktionellen Siliconpolyethercopolymeren der mittleren Formel

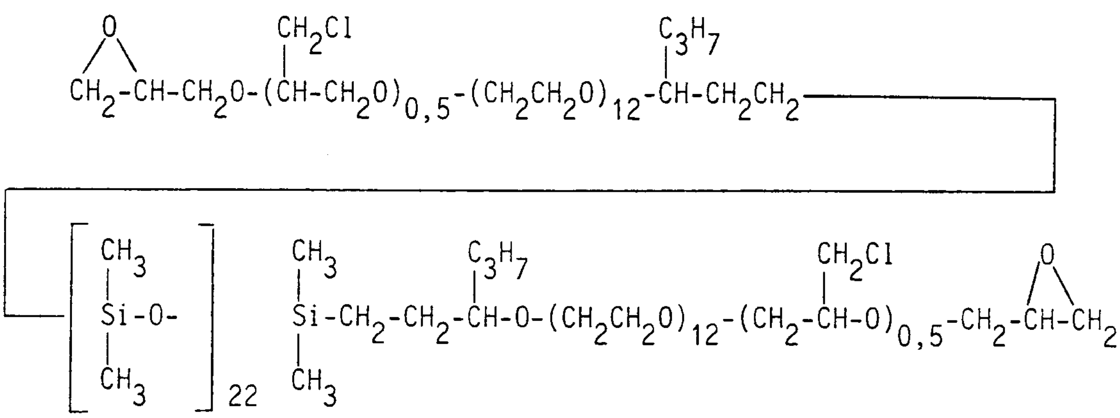

werden bei Raumtemperatur zusammengegeben und analog der in Beispiel 2 angegebenen Vorschrift umgesetzt. Zur Neutralisation werden insgesamt 19,1 g Essigsäure benötigt. Die Lösung des entstandenen Siliconpolyetherbuntesalzes enthält ca. 50 % Feststoffe.

Beispiel 4

23,3 g (94 mMol) $Na_2S_2O_3$ . 5 $H_2O$, 165 ml Wasser, 400 ml Isopropanol und 500 g des epoxifunktionellen Siliconpolyethercopolymeren der mittleren Formel

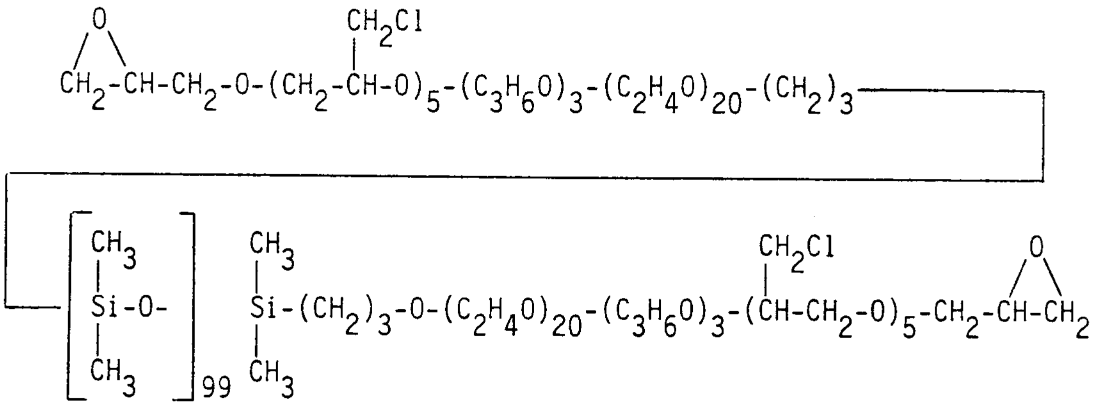

werden bei Raumtemperatur zusammengegeben und analog der in Beispiel 2 angegebenen Vorschrift umgesetzt. Zur Neutralisation werden insbesamt 5,6 g Essigsäure benötigt. Die Lösung des entstandenen Siliconpolyetherbuntesalzesenthält ca. 50 % Feststoffe.

Beispiel 5

76,9 g (0,31 Mol) $Na_2S_2O_3$ . 5 $H_2O$, 160 ml Wasser, 440 ml Isopropanol und 500 g des epoxifunktionellen Siliconpolyethercopolymeren der mittleren Formel

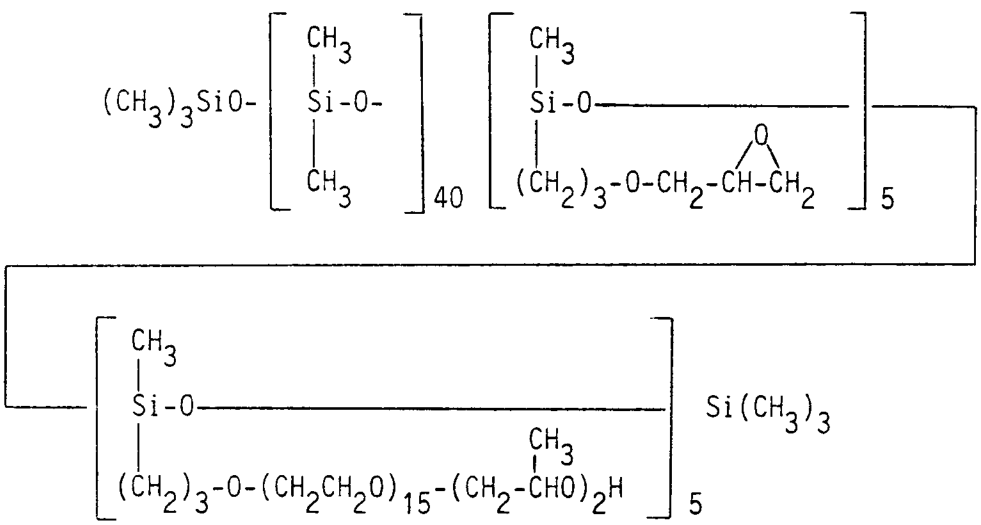

werden bei Raumtemperatur zusammengegeben und analog der in Beispiel 2 angegebenen Vorschrift umgesetzt. Zur Neutralisation werden insgesamt 18,5 g Essigsäure benötigt. Die Lösung des entstandenen Siliconpolyetherbuntesalzes enthält ca. 50 % Festoffe.

Beispiel 6

70,2 g (0,283 Mol) $Na_2S_2O_3$ . 5 $H_2O$, 162 ml Wasser, 435 ml Isopropanol und 500 g des epoxifunktionellen Siliconpolyethercopolymeren der mittleren Formel

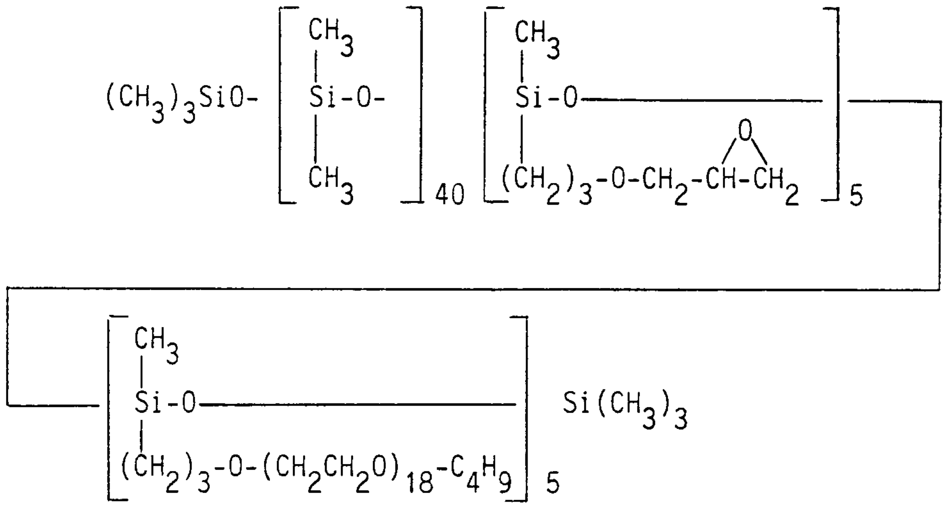

werden bei Raumtemperatur zusammengegeben und analog der in Beispiel 2 angegebenen Vorschrift umgesetzt. Zur Neutralisation werden insgesamt 17 g Essigsäure benötigt. Die Lösung des entstandenen Siliconpolyetherbuntesalzes enthält ca. 50 % Festoffe.

Beispiel 7

157,7 g (0,636 Mol) $Na_2S_2O_3$ . 5 $H_2O$, 155 ml Wasser, 495 ml Isopropanol und 500 g des epoxifunktionellen Siliconpolyethercopolymeren der mittleren Formel

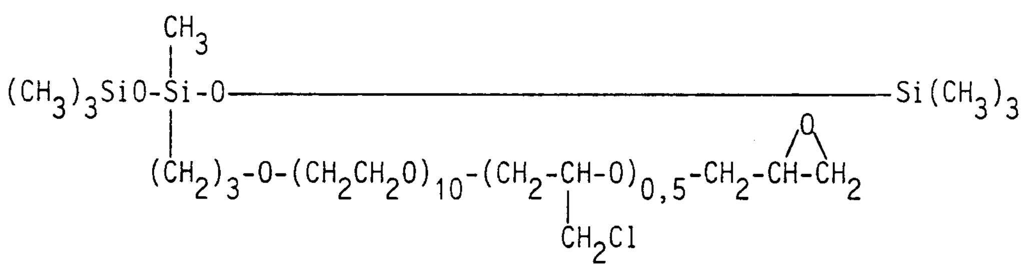

werden bei Raumtemperatur gemischt und analog der in Beispiel 2 angegebenen Vorschrift umgesetzt, wobei jedoch nur langsam auf 50 °C erwärmt wird. Zur Neutralisation werden insgesamt 38 g Essigsäure benötigt. Die Lösung des entstandenen Siliconpolyetherbuntesalzes enthält ca. 50 % Feststoffe.

Beispiel 8

25,3 g (0,102 Mol) $Na_2S_2O_3$ . 5 $H_2O$, 165 ml Wasser, 405 ml Isopropanol und 500 g des epoxifunktionellen Siliconpolyethercopolymeren der mittleren Formel

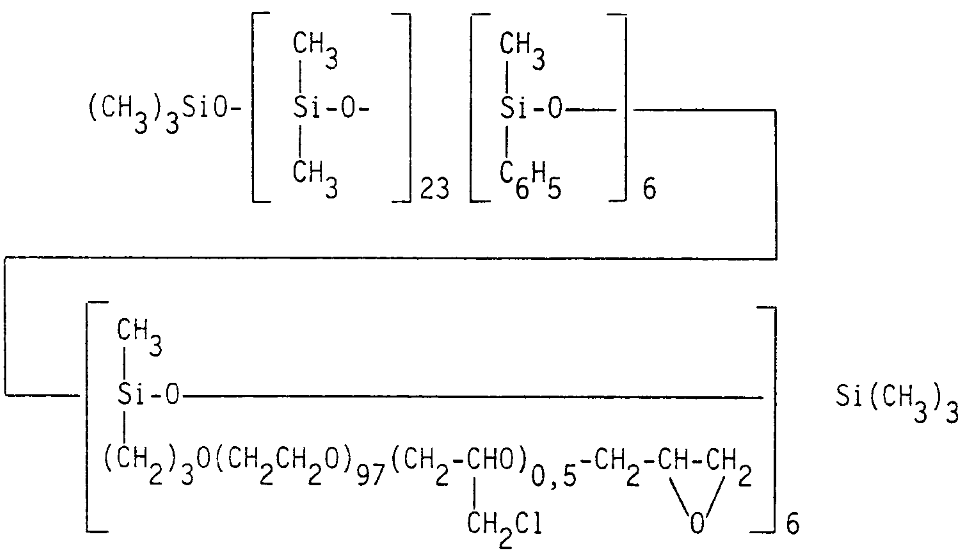

werden bei Raumtemperatur gemischt und analog der in Beispiel 2 angegebenen Vorschrift umgesetzt. Zur Neutralisation werden insgesamt 6 g Essigsäure benötigt. Die Lösung des entstandenen Siliconpolyetherbuntesalzes enthält ca. 50 % Feststoffe.

## Beispiel 9

Verwendung der erfindungsgemäßen Verbindungen zur Behandlung von Haaren

Naturbelassenes chinesisches Schnitthaar wird zu Bündeln zu je etwa 1 g zusammengebunden. Die Haare werden mit Wasser gewaschen und getrocknet. Anschließend werden sie 1 Stunde bei Raumtemperatur in Lösungen folgender Zusammensetzung eingetaucht:

A) 10 % (Wirkstoff) Siliconpolyetherbuntesalz, dessen Herstellung in Beispiel 1 beschrieben ist, in Wasser
B) 10 % (Wirkstoff) Siliconpolyetherbuntesalz aus Beispiel 1, 8 % Thioglykolsäure in Wasser
C) 10 % (Wirkstoff) Siliconpolyetherbuntesalz aus Beispiel 3 in Wasser
D) 10 % (Wirkstoff) Siliconpolyetherbuntesalz aus Beispiel 3, 8 % Thioglykolsäure in Wasser
E) 8 % Thioglykolsäure in Wasser

Anschließend werden die Haare gewaschen und mit dem Fön getrocknet. Die Gewichtszunahme der Haare wird festgehalten. Sie werden hinsichtlich ihres Griffes im trockenen Zustand beurteilt. Die Ergebnisse sind in Tabelle I zusammengefaßt.

Tabelle I

| Behandlung | Gewichtsdifferenz | Griff |
|---|---|---|
| A | + 0,1 % | glatt (etwas schlechter als C) |
| B | + 0,2 % | glatt und geschmeidig |
| C | < 0,1 % | glatt |
| D | + 0,1 % | glatt und geschmeidig |
| E | < 0,1 % | leicht stumpf |
| nicht behandelt | - | stumpf |

## Beispiel 10

Hydrophilierende Ausrüstung von Polyestergewebe

Ein Gewebe aus 100 % Polyester (58,3 g/m²) wird mit frisch bereiteten Flotten der folgenden Zusammensetzung am Foulard ausgerüstet:

A) 20 g/l, bezogen auf Wirkstoff, Siliconpolyetherbuntesalz aus Beispiel 1
B) 20 g/l, bezogen auf Wirkstoff, Siliconpolyetherbuntesalz aus Beispeil 2
C) 20 g/l, bezogen auf Wirkstoff, Siliconpolyetherbuntesalz aus Beispiel 1 und 16 g/l Thioglykolsäure
D) 20 g/l, bezogen auf Wirkstoff, Siliconpolyetherbuntesalz aus Beispiel 2 und 16 g/l Thioglykolsäure
E) 20 g/l eines Siliconbuntesalzes entsprechend DE-PS 33 23 881 der folgenden mittleren Formel und 16 g/l Thioglykolsäure

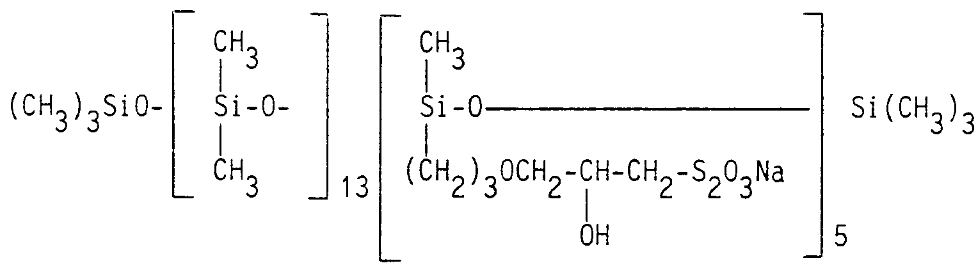

F) 16 g/l Thioglykolsäure
G) 20 g/l eines Siliconpolyethers der folgenden mittleren Formel

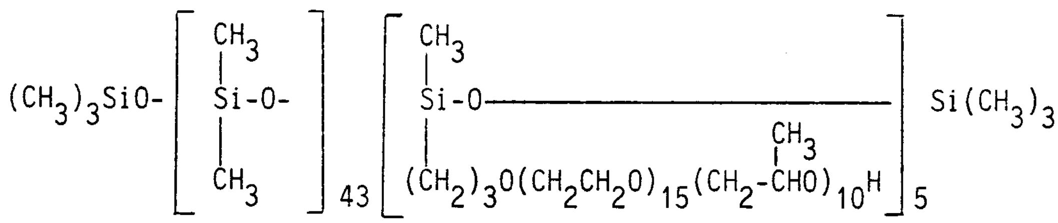

Das Gewebe weist nach dem Abquetschen eine Naßaufnahme von 98 % auf, so daß schließlich 2 % Wirkstoff auf dem Gewebe verbleiben. Nach dem Foulardieren wird das Gewebe bei 70 ° C im Umlufttrokkenschrank innerhalb von 5 Minuten getrocknet. Die Hydrophilie des Gewebes wird durch Aufsetzen eines Wassertropfens bestimmt. Die Zeit, die der Tropfen benötigt, um vollständig in das Gewebe einzudringen wird festgehalten.

Vor der Messung wird das Gewebe jeweils 1 Tag bei 55 % relativer Luftfeuchtigkeit und 20 ° C gelagert. Um die Wasserbeständigkeit der Ausrüstung zu prüfen, wird das Gewebe wiederholt mit Wasser gewaschen und im Tumbler getrocknet. Die Bestimmung der Hydrophilie wird nach ein, zwei, fünf und zehn Wäschen wiederholt. Die Ergebnisse sind in Tabelle II zusammengefaßt.

Tabelle II

| Ausrüstung | Tropfenpenetrationszeit [ sec ] | | | | |
|---|---|---|---|---|---|
| | Zahl der Wäschen | | | | |
| | 0 | 1 | 2 | 5 | 10 |
| nicht ausgerüstet | > 1800 | > 1800 | > 1800 | > 1800 | > 1800 |
| A | 14 | 31 | 40 | 300 | > 1800 |
| B | 16 | 35 | 45 | 540 | > 1800 |
| C | 30 | 35 | 40 | 120 | 300 |
| D | 30 | 37 | 46 | 300 | 780 |
| E | > 1800 | > 1800 | > 1800 | > 1800 | > 1800 |
| F | 570 | > 1800 | > 1800 | > 1800 | > 1800 |
| G | 900 | 1200 | 1920 | > 1800 | > 1800 |

Beispiel 11

Ausrüstung von Wolle

Feingestricktes Material aus reiner Schurwolle wird mit einer Flotte von A) 2 % eines Siliconbuntesalzes (gemäß DE-PS 33 23 881) der mittleren Formel

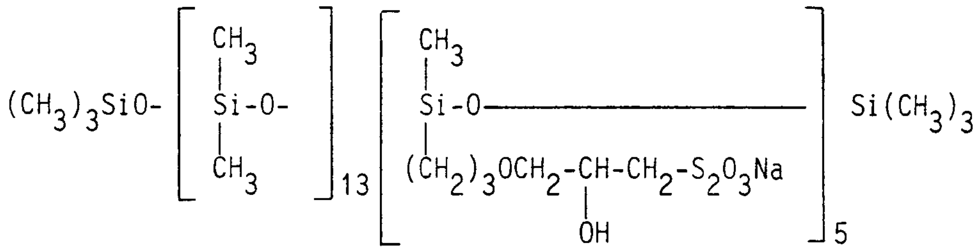

und B) 2 % (bezogen auf Wirkstoff) eines Siliconpolyetherbuntesalzes, dessen Herstellung in Beispiel 1 beschrieben ist, imprägniert. Zur Aushärtung werden die Stücke anschließend mit einer 0,8 %igen Lösung von Thioglykolsäure behandelt und im Tumbler bei 45 °C getrocknet. Die Materialien weisen einen angenehm weichen Griff auf. Im Cubex-Test (gemäß IWS) zeigen die ausgerüsteten Stücke im Vergleich zu einer unbehandelten Probe deutlich verringerte Schrumpfneigung. Die erfindungsgemäß ausgerüstete Probe weist dabei das beste Resultat auf und ist außerdem deutlich hydrophiler.

Die folgenden Ergebnisse werden erhalten (Tabelle III):

Tabelle III

| | Flächenfilzschrumpf |
|---|---|
| unbehandeltes Material | 56 % |
| gemäß A behandeltes Material | 13 % |
| gemäß B behandeltes Material | 11 % |

## Patentansprüche

**1.** Organopolysiloxane mit über Kohlenstoffatome gebundenen Buntesalzgruppen der allgemeinen Formel

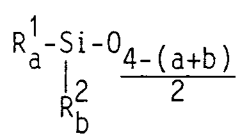

wobei

$R^1$ der Methylrest ist, jedoch bis zu 10 % der Gruppen $R^1$ Phenylreste sein können,

$R^2$ der Rest $R^3$

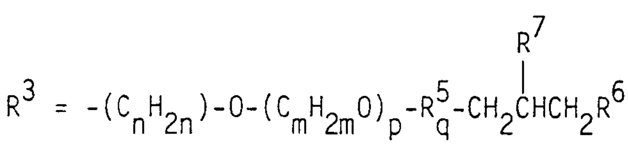

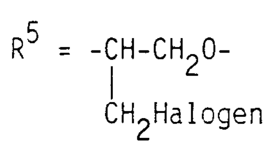 oder 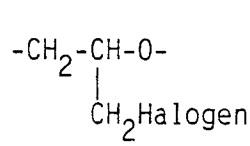

| | |
|---|---|
| $R^6$, $R^7$ = | eine der beiden Gruppen -OH, die andere $-S_2O_3Me$ |
| Me = | Alkalimetall oder gegebenfalls substituierter Ammoniumrest, |
| n = | 3 bis 6, |
| m = | 2 bis 3, |
| p = | 0 bis 100, |
| q = | 0 bis 5, und/oder der Rest $R^4$ |
| $R^4$ = | $-(C_xH_{2x})-O-(C_yH_{2y}O)_zR^8$ |
| $R^8$ = | Wasserstoff-, Alkyl- oder Acylrest mit 1 bis 4 Kohlenstoffatomen, |
| x = | 3 bis 6, |
| y = | 2 bis 3, |
| z = | 1 bis 100, ist, mit der Maßgabe, daß im durchschnittlichen Molekül mindestens 1 Rest $R^2$ die Bedeutung des Restes $R^3$ hat und, wenn im Rest $R^3$ p = 0 ist, mindestens 1 Rest $R^4$ vorhanden ist, |
| a = | 1 bis 2,33, |
| b = | 0,02 bis 1 und $2 \leq a + b \leq 3$ ist. |

2. Verfahren zur Herstellung von Organopolysiloxanen nach Anspruch 1, dadurch gekennzeichnet, daß man Epoxigruppen aufweisende Organopolysiloxane der allgemeinen Formel

$$R^1_a-\underset{R^9_b}{\underset{|}{Si}}-O_{\frac{4-(a+b)}{2}}$$

worin
$R^1$, a und b wie oben definiert sind, und
$R^9$ der Rest $R^{10}$

$$R^{10} = -(C_nH_{2n})-O-(C_mH_{2m}O)_p-R^5_q-CH_2\underset{\diagdown O \diagup}{CHCH_2}$$

$R^5$, n, m, p, q wie oben definiert, oder
der Rest $R^4$, $R^4$ wie oben definiert, ist,
mit der Maßgabe, daß im durchschnittlichen Molekül mindestens 1 Rest $R^9$ die Bedeutung des Restes $R^{10}$ hat und, wenn im Rest $R^{10}$ p = 0 ist, mindestens 1 Rest $R^4$ vorhanden ist,
mit in bezug auf Epoxigruppen äquimolaren Mengen $Me_2S_2O_3$ in wäßrigem Medium, dem gegebenenfalls polare organische Lösungsmittel zugesetzt sind, bei Temperaturen bis zu 100 °C umsetzt, wobei während der Umsetzung Säuren in solchen Mengen zugesetzt werden, daß ein pH-Bereich von 5 bis 9 eingehalten wird.

3. Verwendung der Verbindungen nach Anspruch 1 zur permanenten Ausrüstung von Fasern oder Faserprodukten oder zur Behandlung von Haaren.

**Claims**

1. Organopolysiloxanes having Bunte salt groups bonded by carbon atoms, of the general formula

$$R^1_a\text{-}\underset{\substack{| \\ R^2_b}}{Si}\text{-}O_{\frac{4-(a+b)}{2}}$$

wherein

| | |
|---|---|
| $R^1$ | is the methyl radical, but up to 10% of the groups $R^1$ can be phenyl radicals, |
| $R^2$ | is the radical $R^3$ |

$$R^3 = -(C_nH_{2n})\text{-}O\text{-}(C_mH_{2m}O)_p\text{-}R^5_q\text{-}CH_2\underset{}{\overset{\overset{R^7}{|}}{C}}HCH_2R^6$$

$$R^5 = \underset{\substack{| \\ CH_2halogen}}{-CH}\text{-}CH_2O- \quad \text{or} \quad -CH_2\text{-}\underset{\substack{| \\ CH_2halogen}}{CH}\text{-}O-$$

| | |
|---|---|
| $R^6$ and $R^7$ = | one of the two groups -OH, the other $-S_2O_3Me$ |
| Me = | an alkali metal or optionally substituted ammonium radical, |
| n = | 3 to 6, |
| m = | 2 to 3, |
| p = | 0 to 100, |
| q = | 0 to 5, and/or |
| | the radical $R^4$ |
| $R^4$ = | $-(C_xH_{2x})\text{-}O\text{-}(C_yH_{2y}O)_zR^8$ |
| $R^8$ = | a hydrogen, alkyl or acyl radical having 1 to 4 carbon atoms, |
| x = | 3 to 6, |
| y = | 2 to 3, |
| z = | 1 to 100, |
| | with the proviso that in the average molecule at least one radical $R^2$ has the meaning of the radical $R^3$ and, if p is 0 in the radical $R^3$, at least one radical $R^4$ is present, |
| a = | 1 to 2.33, |
| b = | 0.02 to 1 and |
| | $2 \leqq a + b \leqq 3$. |

**2.** Process for the preparation of organopolysiloxanes according to Claim 1, characterised in that organopolysiloxanes containing epoxide groups, of the general formula

$$R^1_a\text{-}\underset{\substack{| \\ R^9_b}}{Si}\text{-}O_{\frac{4-(a+b)}{2}}$$

wherein

$R^1$, a and b are as defined above and

$R^9$ is the radical $R^{10}$

$$R^{10} = -(C_nH_{2n})-O-(C_mH_{2m}O)_p-R^5_q-CH_2\underset{\diagdown O \diagup}{CHCH_2}$$

$R^5$, n, m, p, q are as defined above, or
the radical $R^4$, with $R^4$ as defined above,
with the proviso that in the average molecule at least one radical $R^9$ has the meaning of the radical $R^{10}$ and, if p is 0 in the radical $R^{10}$, at least one radical $R^4$ is present,
are reacted with equimolar amounts, with respect to the epoxide groups, of $Me_2S_2O_3$ in an aqueous medium, to which polar organic solvents are added if appropriate, at temperatures of up to 100 °C, acids being added during the reaction in amounts such that a pH range of 5 to 9 is maintained.

3. Use of compounds according to Claim 1 for permanent finishing of fibres or fibre products or for treatment of hair.

**Revendications**

1. Organopolysiloxanes contenant des groupes de sels de Bunte liés par des atomes de carbone, répondant à la formule générale :

$$R^1_a-\underset{R^2_b}{\underset{|}{Si}}-O_{\frac{4-(a+b)}{2}}$$

où

| | |
|---|---|
| $R^1$ | représente le reste méthyle, mais jusqu'à 10 % des groupes $R^1$ peuvent être des restes phényle, |
| $R^2$ | est le reste $R^3$ |

$$R^3 = -(C_nH_{2n})-O-(C_mH_{2m}O)_p-R^5_q-CH_2\overset{R^7}{\overset{|}{C}}HCH_2R^6$$

$$R^5 = -\underset{CH_2-\text{halogène}}{\underset{|}{CH}}-CH_2O- \quad \text{ou} \quad -CH_2-\underset{CH_2-\text{halogène}}{\underset{|}{CH}}-O-$$

| | |
|---|---|
| $R^6$, $R^7$ : | un des deux groupes représente -OH et l'autre groupe représente $-S_2O_3Me$, |
| Me = | un métal alcalin ou un reste d'ammonium éventuellement substitué, |
| n = | 3 à 6, |
| m = | 2 à 3, |
| p = | 0 à 100, |
| q = | 0 à 5 ; et/ou le reste $R^4$ |
| $R^4$ = | $-(C_xH_{2x})-O-(C_yH_{2y}O)_zR^8$ |
| $R^8$ = | un atome d'hydrogène ou un groupe alcoyle ou acyle contenant 1 à 4 atomes de carbone, |
| x = | 3 à 6, |
| y = | 2 à 3, |
| z = | 1 à 100, à la condition qu'au moins 1 reste $R^2$ ait la signification du reste $R^3$ dans la molécule moyenne et qu'au moins 1 reste $R^4$ soit présent quand p = 0 dans le reste $R^3$, |
| a = | 1 à 2,33, |

b = 0,02 à 1, et
$2 \leqq a + b \leqq 3$.

**2.** Procédé de préparation d'organopolysiloxanes selon la revendication 1, caractérisé en ce qu'on fait réagir, à des températures allant jusqu'à 100 °C, des organopolysiloxanes, comportant des groupes époxy, répondant à la formule générale :

$$R^1{}_a\underset{\displaystyle R^9{}_b}{\underset{|}{-Si-}}O_{\frac{4-(a+b)}{2}}$$

où
$R^1$, a et b sont définis comme précédemment, et
$R^9$ représente le reste $R^{10}$

$$R^{10} = -(C_nH_{2n})-O-(C_mH_{2m}O)_p-R^5{}_q-CH_2\underset{\diagdown O \diagup}{CHCH_2}$$

où $R^5$, n, m, p et q sont définis comme précédemment ; ou
le reste $R^4$, qui est défini comme précédemment,
à la condition qu'au moins 1 reste $R^9$ ait la signification du reste $R^{10}$ dans la molécule moyenne et qu'au moins 1 reste $R^4$ soit présent quand p = 0 dans le reste $R^{10}$,
avec des quantités équimolaires, par rapport aux groupes époxy, de $Me_2S_2O_3$ dans un milieu aqueux auquel on a ajouté éventuellement des solvants organiques polaires, réaction pendant laquelle on ajoute des acides en des quantités telles qu'on maintient un pH compris entre 5 et 9.

**3.** Utilisation des composés selon la revendication 1 pour l'apprêtage permanent de fibres ou de produits fibreux ou pour le traitement des cheveux.